(19) Europäisches Patentamt
European Patent Office
Office européen des brevets

(11) EP 1 279 010 B1

(12) **EUROPEAN PATENT SPECIFICATION**

(45) Date of publication and mention of the grant of the patent:
**14.01.2009 Bulletin 2009/03**

(21) Application number: **01926237.7**

(22) Date of filing: **01.05.2001**

(51) Int Cl.:
***G01J 3/02*** *(2006.01)* ***G01J 3/28*** *(2006.01)*

(86) International application number:
**PCT/NL2001/000327**

(87) International publication number:
**WO 2001/084097 (08.11.2001 Gazette 2001/45)**

(54) **MEASURING WAVELENGTH CHANGE**

MESSUNG VON WELLENLÄNGEN-ÄNDERUNGEN

PROCEDE ET MOYENS DESTINES A MESURER DES CHANGEMENTS DE LONGUEURS D'ONDES

(84) Designated Contracting States:
**AT BE CH CY DE DK ES FI FR GB GR IE IT LI LU MC NL PT SE TR**

(30) Priority: **01.05.2000 PCT/NL00/00281**

(43) Date of publication of application:
**29.01.2003 Bulletin 2003/05**

(60) Divisional application:
**07121833.3 / 1 903 320**

(73) Proprietor: **Nederlandse Organisatie voor Toegepast-Natuurwetenschappelijk Onderzoek TNO**
**2628 VK Delft (NL)**

(72) Inventor: **CHENG, Lun, Kai**
**NL-2628 VK Delft (NL)**

(74) Representative: **Prins, Adrianus Willem et al**
**Vereenigde**
**P.O.Box 87930**
**2508 DH Den Haag (NL)**

(56) References cited:
**EP-A- 0 431 368**
**US-A- 4 669 880**
**US-A- 5 796 479**
**US-A- 5 933 235**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 279 010 B1

## Description

Field of the invention

The present invention relates to an optical wavelength analysis arrangement comprising

- entrance selection means (4) for receiving a light beam (3) comprising one or more signals each with its own wavelength and for passing at least part of said beam (3);
- diffractive means (6, 7,9) arranged to receive said at least part of said beam (3) passing the entrance selection means (4) and to diffract each of said signals at an angle dependent on said wavelength;
- detector means (8) arranged to receive said diffracted signals and to generate one or more detector output signals in dependence on the diffracted signals;
- processing means (21) connected to said detector means for receiving said detector output signals and determining the wavelength of each of said signals and a calibration value conceived to interrelate a detector element and a wavelength of an image of the entrance selection means projected on said detector element.

The invention further relates to a method of optical wavelength analyzing.
The invention still further relates to a computer arrangement, a computer program product and a data carrier.

Prior art

An embodiment of an optical wavelength analysis arrangement, is known from WO 99/09370, in which such an arrangement is described for usage in Fiber Bragg Grating (FBG) based structure monitoring applications. In such applications, physical parameters like strain, temperature, pressure and others, are measured by a fiber n.etwork, containing a plurality of optical FBG sensors distributed over the structure. FBG sensors are capable of precise and absolute measurement of physical parameters as mentioned above. A FBG sensor installed in a fiber-optic network, reflects light signals that travel through the optical fiber, with a wavelength k that relates to the FBG periodicity A as given by equation [1] : A = 2nA [1], where k is the wavelength of the light reflected by the FBG sensor, n is the effective index of refraction of the optical fiber, and A is the periodicity of the FBG sensor, respectively.
Physical parameters that can be measured with FBGs, are related to the reflected wavelength due to the coupling of the physical parameters to the refractive index or the periodicity of the grating.
In structure monitoring applications, measurement of one or more specific physical parameters derived from a signal of an optical sensor in the fiber, is performed at a plurality of locations in the structure (e. g., a fuselage of an aircraft). To identify the origin of signals, each optical sensor generates a signal with a wavelength, specific for that sensor in that location. Thus, each wavelength corresponds to a location in the network. The signal wavelengths are well separated by intervals. The intervals are large enough to prevent overlap of sensor signals, when the response of a sensor changes due to change in a physical parameter, measured at the location of the sensor.
The light beam reflected by the sensors on the fiber network thus comprises a plurality of signals with different wavelengths has to be analysed by e. g., spectrometric means.
In many optical applications like FBG sensor networks, the wavelength of incident light is measured by a spectrometric arrangement with the purpose to determine a physical parameter related to the wavelength.
The method of spectrometry to determine the wavelength of light originated by the optical sensor, is well known. Light, gathered from a source (e. g., an optical sensor), is projected on a grating. Due to the wave characteristics of the light and the periodicity of the grating, the light is diffracted by the grating in one or more orders with their own direction as related to the wavelength (s) of the light, the angle of incidence, and the periodicity of the grating. By measurement of the angle of the diffraction direction (s) in the spectrometer, the wavelength of the light is determined.
In spectrometers, as known in the art, the diffracted light is projected on a detector array (e. g., a linear or two-dimensional CCD system). In such an arrangement the position of the projected light on the detector is proportional to the wavelength of the light. The position of the projection is determined by fitting a mathematical model to the intensity data as measured by the detector's elements. The fitting procedure is needed here, since the spatial intensify distribution of the incident light beam that enters the spectrometer's slit is not uniform, because typically, the beam is focussed on the slit to collect as much optical power as possible. The spatial intensity profile of the projected light beam is usually described by a peak-shaped curve. To determine the centroid of the signal, a model describing the shape of the peak is fitted to the measured signal. Due to the non-linearity of the spatial intensity distribution, a useful fit can be accomplished only if a plurality of data points within the profile are measured. To obtain a reasonable accuracy with a resolution higher than the size of a detector element (a"pixel"), the spot projected on the detector array must cover a sufficiently large number of elements in the array, all of which must be sampled in the fitting procedure. Typically, a resolution of approximately 1/10 pixel is possible on a range of 10 pixels.

For a measuring range, which is, for example, 50 times larger, the range on which the light beam is projected must be extended to 50 detector elements. Taking into account a cross-talk separation between signals of about 10 detector elements, in that case a range of more than 60 detector elements on the detector is needed for one signal.

Usually, in a spectrometric application, many wavelengths are to be measured simultaneously, which requires that the spectrometer provides a sufficient large detector array. When, for example, 32 signals must be measured simultaneously, the detector array needs approximately 2000 elements.

In WO99/09370 a number of fiber channels each comprising a plurality of signals with different wavelengths are monitored by spectrometric means using a two- dimensional detector array on which the spectra of each fiber channel are projected on elongated regions of the array.

As known to those skilled in the art, in a such. FBG sensor network, measurement of wavelengths of optical signals must be carried out at a rate, sufficiently efficient with respect to the number of FBG sensors in the network and the requirements for the type of application e. g., monitoring a structure by the FBG sensor network. By consequence of the method of fitting the peak shapes, a disadvantage of the arrangement of WO 99/09370 to obtain subelement accuracy is, the rate at which data can be collected and calculated, especially, when high sample rates are required. From the paper of S.

Chen et al.,"Multiplexing of large-scale FBG arrays using a two-dimensional spectrometer", SPIE vol. 3330 (1999), p. 245-252, it can be found that with a projection of a signal from a light beam on a field of 7 x 7 detector elements a resolution of approximately 1/56 of an element can be accomplished.

Due to the large amount of detector elements in an array, in such systems the overall sampling rate is in the order of only 25-100 Hz.

Another embodiment of an optical wavelength analysis arrangement is known from US-A-5 933 235. The known arrangement comprises entrance selection means for receiving a light beam comprising one or more signals each with its own wavelength and for passing at least part of said beam; diffractive means arranged to receive said at least part of said beam passing the entrance selection means and to diffract each of said signals at an angle dependent on said wavelength; detector means arranged to receive said diffracted signals and to generate one or more detector output signals in dependence on the diffracted signals; processing means connected to said detector means for receiving said detector output signals and determining the wavelength of each of said signals. In the known system in order to determine the wavelength of a diffracted signal impinging on a detector element a correlation is used between devices forming a detector array and respective wavelengths expected to impinge on such detectors. It should be noted that the incoming beam in the known system has a Gaussian profile necessitating elaborate calculus for determination of a wavelength. In addition, the detector element assigned to a wavelength is formed as a one piece of a suitable detector material which has a problem of coverage of the detector element by the diffracted beam.

## Summary of the invention

It is an object of the present invention to provide an arrangement and a method to improve the measurement of a signal and the processing of the signal by processing means, in order to determine the wavelength of the signal in a simple, efficient, and fast manner, with high accuracy.

This object is obtained in an optical wavelength analysis arrangement as defined in the outset characterised in that (see claim 1).

- said entrance selection means (4) is arranged for outputting a beam with a spatial uniform intensity distribution having rectangular shape :
- said detector means (8) comprise at least a pair of adjacent first detector element (32, 35, 38) and second detector element (33, 36, 39), the first detector element and the second detector element comprising a plurality of detector devices;
- said diffractive means (6, 7, 9) are arranged to diffract each of said signals such that each diffracted signal having spatially uniform intensity distribution impinges on different detector elements, so that each detector element is partially covered by said each diffracted signal in a direction of a beam shift and at least one exterior detector device of the first detector element and one exterior device of the second detector element are partially illuminated in the beam shift direction by said each diffracted signal;
- the first detector element (32; 33; 35; 36; 38; 39) being arranged for receiving at least a first signal portion with a first signal portion level being proportional to a wavelength shift due to the spatial uniform intensity distribution the output of said first detector device being related to said first signal portion;
- the second detector element being arranged for receiving_a second signal portion with a second signal portion level being proportional to the wavelength shift due to the spatial uniform intensity distribution the output of said second detector device of the second detector element being related to said second signal portion; wherein
- said processing means (21) are arranged to determine, for each said pair the wavelength of the diffracted signal received by calculation of the center of gravity based on the first signal level and the second signal level and said calibration value.

With such an arrangement, the spatial intensity profile of a signal is already well known before detection. This implies that to determine the wavelength of the signal as measured by the detection means, the detection means needs a subset of two or more detector elements to measure the signal. Still due to the fact that the incoming beam is adapted with homogeneous intensity distribution the wavelength impinging of a detector element is calculated using simple calculus. Accordingly, the computation time involved to measure the wavelength of a signal is strongly reduced.

Consequently, the measurement of wavelengths of a plurality of signals in the arrangement of the present invention requires less time than is known from the prior art.

The method according to the invention comprises the steps of (see claim 16)

- receiving a light beam (3) comprising one or more signals each with its own wavelength having a rectangular shape;
- diffracting each of said signals at an angle dependent on said wavelength;
- receiving said diffracted signals by detector means (8) and generating at least two detector output signals in dependence on the diffracted signals by a plurality of detector elements (32, 33, 35, 36, 38, 39);
- providing a calibration value interrelating a detector element and a wavelength of a image projected on said detector element;
- determining the wavelength of each of said signals from said detector output signals characterised by:
- a detector means (8) comprising at least a pair of adjacent first detector element (A) and second detector element (B), the first detector element and the second detector element comprising a plurality of detector devices,
- said beam having a spatial uniform intensity distribution;
- diffracting each of said signals such that

each diffracted signal having a spatially uniform intensity distribution impinges on a different pair of adjacent first detector element (A) and second detector element (B) for receiving a first signal portion with a first signal portion level being proportional to a wavelength shift due to the spatial uniform intensity distribution and a second signal portion with a second signal portion level being proportional to the wavelength shift due to the spatial uniform intensity distribution;

each detector element is partially covered by each said signal in a beam shift direction and at least one exterior detector device of the first detector element and one exterior detector device of the second detector element are partially illuminated by each of said signals;

- determining, for each one of said pair, the wavelength of the signal received by calculating the center of gravity based on said first signal portion level and said second signal portion level and said calibration value.

Additional embodiments are defined in dependent claims.

Brief description of the drawings

Below, the invention will be explained with reference to some drawings, which are intended for illustration purposes only and not to limit the scope of protection as defined in the accompanying claims.

Figure 1 shows a schematic overview of an arrangement in accordance with the present invention; Figure 2 shows a schematic overview of a computer arrangement related to this invention; Figure 3 shows a schematic drawing of a signal projected on detection means in accordance with a first preferred embodiment of the present invention; Figures 4a and 4b show an illustration of the method to calculate the position and wavelength of a signal, projected on the detection means, and their respective change, in an arrangement of the present invention; Figure 5 shows a block diagram of a procedure in a computer program in accordance with the method as shown in figures 4a and 4b; Figure 6 shows exemplary results of a experiment, in which a change of wavelength of a signal, projected on the detection means, was measured as a function of time; Figure 7 shows a schematic drawing of a signal projected on detection means in accordance with a second preferred embodiment of the present invention; Figure 8 shows a schematic drawing of a signal projected on detection means in accordance with a third preferred embodiment of the present invention; Figure 9 shows an arrangement of the present invention, in which multiple sets of signals with different wavelengths, are measured simultaneously; Figure 10a shows an arrangement of the present invention, in which an alternative set-up of the diffractive means is applied; Figure 10b shows an arrangement of the present invention, in which the diffractive means is combined into a single optical element; Figure 10c shows an arrangement of the present invention, in which prismatic means are applied; Figure 10d shows an arrangement of the present invention, in which a combination of dispersive means are utilised.

Detailed description of preferred embodiments

The present invention relates to an arrangement and method of simple and fast measurement of a wavelength of a signal from an optical sensor, which may be an FBG sensor, or any other type of optical sensor as known in the art.

In the present invention the signal to be measured is adapted in such a way that the signal has a spatial uniform intensity distribution. The intensity uniformity of the signal simplifies measurement of the wavelength of such a signal. Also, computations relating to the wavelength of the measured signal are simplified by the spatial uniformity of the signal.

In figure 1 a schematic overview of an arrangement in accordance with the present invention is shown. In the arrangement 1, a spectrometer 2 is used to measure the wavelength of light signals from one or more optical sensors. Light comprising signals from one or more sensors is projected by, for example, a beam expander element, as a beam 3 on an entrance slit 4 of the spectrometer 2. From the light beam 3, a selection is made by the slit 4 to obtain a smaller beam 5 with a spatial uniform intensity. By means of a lens 6 at focal point distance from the slit 4, the beam is projected on a dispersive element like a grating 7. The grating 7 diffracts the beam at a diffraction angle relative to the incoming beam. The diffraction angle is dependent on the wavelength, the periodicity of the grating 7, and the incident angle of the beam on the grating 7. Thus, the beam is dispersed into its spectral components. The spectrum is projected on a detector 8, by a lens 9 at focal point distance from the detector. The detector 8, comprising sensor 10 and control electronics 11, is capable of measuring the optical power of the projected spectrum as a function of the position on the detector 8, in which the position is correlated to the wavelength of the light. The detector 8 may be a CCD sensor, a CMOS imager, or any other capable type of sensor as known in the art.

Using this optical set-up, the projection of a monochromatic beam on the detector 8 is an image of the slit opening 4. In case the focal length of lens 6 is equal to that of lens 9, the image is a one to one image of the slit opening.

By means of the control electronics, the detector 8 is connected to a computer 20, which records the spectrum measured by the detector, and calculates the wavelengths of signals in the spectrum.

Figure 2 shows a schematic overview of a computer arrangement 20 comprising processor means 21 with peripherals. The processor means 21 are connected to memory units 18, 22,23,24 which store instructions and data, an I/O connection 25 which connects the processor means 21 to the control electronics 11 of detector 8, one or more reading units 26 (to read, e. g., floppy disks 19, CD ROM's 20, DVD's, etc.), a keyboard 27 and a mouse 28 as input devices, and as output devices, a monitor 29 and a printer 30.

The memory units shown comprise RAM 22, (E) EPROM 23, ROM 24 and hard disk 18. However, it should be understood that there may be provided more and/or other memory units known to persons skilled in the art. Moreover, one or more of them may be physically located remote from the processor means 21, if required. The processor means 21 are shown as one box, however, they may comprise several processing units functioning in parallel or controlled by one main processor, that may be located remote from one another, as is known to persons skilled in the art. Moreover, other input/output devices than those shown (i. e., 27,28,29,30) may be provided.

Figure 3 shows a schematic drawing of a monochromatic signal projected on detector 8 in accordance with the present invention.

The detector elements 32,33,35,36,38,39,41,42 of the detector 8 are arranged in a row. The position of the center of the image of the slit for specific wavelengths A0, A1, 2 on the interfaces between detector elements 32,33, and 35, 36 and 38,39 respectively is indicated by dashed vertical lines. Individual detector elements 32, 33 forming a pair comprise a plurality of detector devices (not shown) On the detector 8 a signal's image 31 of the slit opening 4 is projected by the optics of the spectrometer 2 as shown in figure 1.

The shape of the image 31 is conformal with the rectangular slit opening 4. By design of the projection system, the width B of the image 31 is smaller than the width W of one of the detector elements 32,33. Thus, the image only partially covers both detector elements in the one (e. g., horizontal) direction as indicated by arrow X. The covered length on the elements 32,33 is denoted as x32, x33 respectively. In the other perpendicular vertical direction as indicated by arrow Y, the height H of the image is also smaller than the detector element height h. However, the height H of the image may be larger than the detector element height h, thus covering a detector element completely in this direction.

By a calibration procedure as known in the art, the position of the detector elements is translated to a wavelength scale. By means of this calibration procedure the wavelength of a signal can be determined from the position of the signal's image on the detector elements 32,33. In figure 3 a dashed line denotes the position of the center of the image of the slit for wavelength $\lambda 1$ the interface between elements 32 and 33. Other detector element pairs 35, 36 and 38, 39 with their respective wavelengths $\lambda 0$ and $\lambda 2$ are shown. In between the detector element pairs a spacing, for example by means of one or more unused detector elements 41,42, is included, in order to prevent cross-talk of signals. It is to be noted that in stead of unused detector elements 41,42 an empty gap may be implemented in between the detector element pairs (32,33), (35,36) and (38, 39).

Figures 4a and 4b show an illustration of the method to calculate the position and wavelength of a signal, projected on detector 8, and their respective change, in an arrangement of the present invention.

In figure 4a as an example, the centreline of the image 31 is projected on the detector elements 32,33 and coincides with the interface of the two detector elements.

If a spatial uniform intensity of the image is assumed, the optical power 43,44 measured on a detector element 32,33 will be proportional to the area H*x32, H*x33 covered on the element, which is directly proportional to the coverage in the direction X, since the coverage in the direction Y is constant.

The difference between the optical power 43,44 is determined. In order to correct for fluctuations of the optical power of the beam, the difference is normalised by dividing by the sum of optical power 43 and 44.

In this case, the optical power 43,44 measured is equal on each element, since x32 equals x33. The difference in optical power is zero, which indicates that the image is projected symmetrically on the detector elements, with the centre of the image at the interface between the two elements. Thus, the wavelength of the signal equals Xi.

Figure 4b shows the projection of image 31 on detector 8 for a signal with a wavelength that differs from λ1 by an amount δλ.

Because the position of the image 31 on the detector 8 is directly proportional (as calibrated) to the wavelength of the projected image, a wavelength difference δλ is directly proportional to a shift δx of the image's centreline. The centreline of the image is projected shifted over a distance δx with respect to the interface between the two elements 32, 33. Since the illuminated width x'32 is not equal to x'33, the normalised difference of optical power 45 and 46 measured on the respective detector elements 32, 33 and divided by the sum of the optical powers 45 and 46, is unequal to zero.

In this way, the wavelength of a signal can be measured advantageously, by determining the normalised difference of the optical power received by two adjacent detector elements. The measurement requires a limited number of detector elements and the calculation requires few and simple computations by processor means 21 with relatively short computation times.

In figure 5 a block diagram is shown of a method related to the present invention, to be carried out by the processor means 21, to determine the wavelength of a signal projected on a pair of detector elements, according to the measurement principle as shown in figures 4a and 4b.

In step 51, the processor means 21 enter the procedure by a request to select two adjacent detector elements Ej, Ej+1 for measurement.

In steps 52 and 53, the computer addresses the control electronics 11 to read optical power I (Ej), I (Ej+1) of elements Ej, Ej+1, and to transfer the data in a readable format to the computer.

In step 54, it is checked if a signal is present on the selected elements.

If light is measured., then results are calculated. Otherwise, the following steps 55-58 are skipped.

Step 55 calculates the optical power difference between the elements Ej, Ex+" normalised by the sum of the optical power I (Ej) and I (Ej+1) Step 56 calculates the corresponding shift δx on the detector 8.

In step 57 the wavelength shift δλ with respect to the wavelength SI corresponding to the centreline between detector elements Ej, Ej+1 is calculated from shift 8x by using wavelength calibration data for the detector.

Step 58 calculates the measured wavelength by adding the wavelength shift δλ to the wavelength λ1, corresponding to the position of the detector elements centreline.

This wavelength, λ1 is derived from the wavelength calibration data for the detector 8.

In step 59 the procedure ends. The processor means 21 return to the procedure where the request for step 51 originated from, with the value of the measured wavelength, or if no optical power was measured on the detector elements, with a predetermined value e. g., zero to signal this state.

Change of wavelength as a function of time can be measured by repeating the procedure as shown in figure 5, at given time intervals. In each measurement the wavelength of the signal is determined by the procedure of figure 5. The difference δλ relative to the first measured value, as a function of time, can be calculated, stored, and processed further.

Figure 6 shows the results of measuring the wavelength of a signal carried out in an arrangement of the present invention.

A monochromatic light source of which the wavelength changes directly proportional with time, is projected as a parallel beam on the slit opening 4 of the spectrometer. The intensity distribution of the light beam at the slit opening 4 has a spatial uniform intensity distribution. In figure 6 the normalised measured wavelength of the signal from the light source is shown as a function of time.

The sub-detector element accuracy in such arrangement depends on the signal to noise ratio of the detector elements. In this arrangement, using commercially available detectors an accuracy of 1/500 can be obtained, at an overall sampling rate in the order of a several kHz.

Therefore, depending on the application, it may be possible to have only one singe detector element, or a few single detector elements set-up separately at various locations in the arrangement to measure wavelength (s).

Also, if the optical power level of the beam is monitored constantly, for example, by a separate detector, measurement on only a single detector element is sufficient to determine the wavelength of a diffracted signal. Here, the shift of the wavelength can be calculated from the quotient of the measured optical power level on the single detector element 32 and the optical power level of a reference signal, used for calibration. In such an embodiment, the optical power level of the reference signal is to be corrected by dividing by the actual optical power level of the diffracted signal.

Figure 7 shows a further schematic drawing of a signal projected on detection means in accordance with present invention.

In Figure 7, entities with the same reference numbers as used in preceding figures, refer to the same entities as shown in those figures. In this

Figure, the spatially uniform signal is projected as an image 31 on more than two detector elements of the detector 8. Still, in this embodiment the advantage of a significant simple and fast calculation scheme as presented above, can to a large extent be achieved here also.

The detector elements 33d, 34,35,35a, 35b, 35c, 35d, 36,37,37a, of the detector 8 are arranged in a row. On the detector 8 a signal's image 31 of the slit opening 4 is projected by the optics of the spectrometer 2 as shown in figure 1.

The shape of the image 31 is conformal with the rectangular slit opening 4. By design of the projection system, the height H of the image 31 is smaller than the height b of the detector elements 33d, 34,35,35a, 35b, 35c, 35d, 36,37,37a. Thus, in the one (e. g., horizontal) direction as indicated by arrow X, the image 31 covers a plurality of N detector elements 35,35a, 35b, 35c, 35d, 36 of which the two exterior detector elements 35,36 are only partially covered.

However, the height H of the image may be larger than the detector element height h, thus covering a detector element completely in this direction.

In this second preferred embodiment the center of the image 31 is determined by weighing of the signals received by the individual detector elements. By weighing, the "center of gravity" of the image intensity distribution can be calculated. The position of the "center of gravity" will depend on the actual intensity distribution. In case of a spatially uniform intensity distribution the result of weighing will be exactly the center position of the image 31.

Assuming the image 31 covers N detector elements Ej.. Ek (35, 35a, 35b, 35c, 35d, 36) on the detector, each element Ei within that range Ej.. Ek measuring an intensity I (Es), the (horizontal) center position C of image 31 can be calculated by:

$$C = \frac{E_j * I(E_j) + E_{j+1} * I(E_{j+1}) + \ldots + E_{k-1} * I(E_{k-1}) + E_k * I(E_k)}{I(E_j) + I(E_{j+1}) + \ldots + I(E_{k-1}) + I(E_k)}$$

In case of a uniform intensity distribution of the light beam 3, the intensity I measured on the detector elements 35a, 35b, 35c, 35d (i. e., N-2 elements Ej+1... Ek-i) will be identical for all detector elements Ej+1... Ek-i. Only the intensity on the exterior two elements Ej, Ek (35,36) will depend on the actual coverage of respective element Ej, and Ek by the image 31. The center position C can then be calculated by:

$$C = \frac{E_j * I(E_j) + (E_j + E_k) * (\frac{N-2}{2}) * I + E_k * I(E_k)}{I(E_j) + (N-2) * I + I(E_k)}$$

If the light beam 3 has an optical power level which is time invariant, the signals of the detector elements 35a, 35b, 35c, 35d will be identical for all these elements 35a, 35b, 35c, 35d and also constant over time. In that case, the term (N-2) *I is equal to a constant Q. The center position C can then be calculated by:

$$C = \frac{E_j * I(E_j) + (E_j + E_k) * (\frac{Q}{2}) + E_k * I(E_k)}{I(E_j) + Q + I(E_k)}$$

Using a calculation scheme according to one of the latter two equations, the center position C of the signal on the detector 8 can be obtained relatively simply.

Figure 8 shows a still further schematic drawing of a signal projected on detection means in accordance with the present invention.

In figure 8, entities with the same reference numbers as used in preceding figures, refer to the same entities as shown in those figures. In this third embodiment, the detector elements 33d, 34,35,35a, 35b, 35c, 35d, 36,37,37a are grouped in two imaginary detector elements indicated as A and B.

The spatially uniform signal is projected as an image 31 on a plurality of N detector elements 35,35a, 35b, 35c, 35d, 36 of the detector 8. The two exterior detector elements 35,36 are only partially covered. The signal of the imaginary detector elements A and B is the sum of the intensities measured on the respective detector elements belonging to imaginary detector element A, and imaginary detector element B, respectively.

The calculation scheme as explained in figures 4a and 4b for two detector elements, can be used in a similar way for determining the position and wavelength of the signal of image 31 by means of two imaginary detector elements A, B. Although, more detector elements need to be sampled in such a calculation, in this embodiment the advantage of a significant simple and relatively fast calculation scheme as presented above, can to a large extent be achieved here also.

Figure 9 shows an arrangement of the present invention in which multiple sets of signals are measured simultaneously. This arrangement illustrates the possibility of the present invention to provide means of de-multiplexing, an aspect essential to detection systems used in applications where a signal from one of a plurality of optical sensors needs to measured. In figure 9, entities with the same reference numbers as used in preceding figures, refer to the same entities as shown in those figures.

The arrangement as shown in figure 1 can be modified to extend the number of light sources that can be measured by replacing a single slit opening by two or more slit openings.

In figure 9, as an example, an arrangement is shown in which the slit opening 4 is replaced by two slit openings 74,75 on the spectrometer. On each slit opening 74,75 a broadband light source comprising multiple signals of different wavelengths (e.g., from a FBG array network) is projected. The light beam generated in each slit opening 74,75 has a spatial uniform distribution. In a similar way to the embodiment shown in figure 1, each signal with its particular wavelength is projected on a pair of detector elements of a detector array 8. It is to be noted that due to the displacement of slit opening 75 with respect to slit opening 74, the optical path of light from slit opening 74 differs from that from slit opening 75. As illustrated in figure 9 this results in an additional separation of the signals originating from the respective slit openings 74,75: on the detector 8 the spectrum from the light source at slit opening 74 is projected next to the spectrum from the light source at slit opening 75.

In the arrangement as shown in figure 9, de-multiplexing of a plurality of broadband light sources comprising multiple signals of different wavelengths can be performed on a one-dimensional detector array 8 according to one of the preferred embodiments as described above.

A plurality of spectra is projected adjacent to each other on the array. When properly calibrated, all spectra can be analysed simultaneously using the corresponding procedure for that particular embodiment.

Finally, Figures 10a-10d show arrangements of the present invention in which alternative optical means are utilised. In figure IOa-IOd, entities with the same reference numbers as used in preceding figures, refer to the same entities as shown in those figures.

Figure 10a shows an arrangement of the present invention in which the lenses 6,9 of the diffractive means are combined in a single lens 81.

As is known to those skilled in the art, the lens 81 may also be combined with dispersive means 7 into a single optical element as a concave grating 82 with the same functionality as defined by the diffractive means comprising separate projection means 6,9 and dispersive means 7. The latter arrangement is shown in figure 10b.

Figure 10c shows an arrangement of the present invention, in which prismatic means is applied. Instead of a grating 7 as dispersive element, a prism 83 is used to redirect each signal in a direction depending on the wavelength X 2, 3 of the respective signal.

An improved sensitivity can be achieved by replacing the grating 7 by a combination of two or more dispersive elements. An example of such an arrangement is shown in Figure 10d.

Figure 10d shows an arrangement of the present invention, in which a combination of dispersive means are utilised. A light beam encompassing a plurality of signals with wavelength X 2, 3, respectively, entering through the entrance slit 4 is projected by lens 6 on the grating 7. Here the light beam is diffracted in directions depending on the wavelength X 2, 3 of the respective signals. The diffracted beams are projected on a second dispersive element 83, e.g., a prism. The prism redirects each diffracted beam in a direction depending on its wavelength. By dispersing the incoming light beam by more than one dispersive element, a larger separation between individual signals can be achieved. Typically, by this arrangement a higher sensitivity of the instrument can be obtained.

It will be appreciated that other combinations of dispersive elements are possible with similar improved sensitivity.

Moreover, as known to persons skilled in the art, lenses 6,9 may also be replaced by reflective optical elements, like concave mirrors (not shown), without changing the functionality of the optical wavelength analysis arrangement. It is also noted that in the present invention a holographic elem.ent may provide the same functionality as a prism or grating.

## Claims

1. Optical wavelength analysis arrangement comprising:

- entrance selection means (4) for receiving a light beam (3) comprising one or more signals each with its own wavelength and for passing at least part of said beam (3);
- diffractive means (6, 7,9) arranged to receive said at least part of said beam (3) passing the entrance selection means (4) and to diffract each of said signals at an angle dependent on said wavelength;
- detector means (8) arranged to receive said diffracted signals and to generate one or more detector output signals in dependence on the diffracted signals;
- processing means (21) connected to said detector means for receiving said detector output signals and determining the wavelength of each of said signals and a calibration value conceived to interrelate a detector element and a wavelength of an image of the entrance selection means projected on said detector element;

**characterised in that:**

- said entrance selection means (4) is arranged for outputting a beam with a spatial uniform intensity distribution having rectangular shape ;
- said detector means (8) comprise at least a pair of adjacent first detector element (32, 35, 38) and second detector element (33, 36, 39), the first detector element and the second detector element comprising a plurality of detector devices;
- said diffractive means (6, 7, 9) are arranged to diffract each of said signals such that each diffracted signal having spatially uniform intensity distribution impinges on different detector elements, so that each detector element is partially covered by said each diffracted signal in a direction of a beam shift and at least one first exterior detector device of the first detector element and one second exterior detedor device of the second detector element are partially illuminated in the beam shift direction by said each diffracted signal;
- the first detector element (32; 33; 35; 36; 38; 39) being arranged for receiving at least a first signal portion with a first signal portion level being proportional to a wavelength shift due to the spatial uniform intensity distribution, the output of said first detector device being related to said first signal portion;
- the second detector element being arranged for receiving a second signal portion with a second signal portion level being proportional to the wavelength shift due to the spatial uniform intensity distribution the output of said second detector device of the second detector element being related to said second signal portion; wherein
- said processing means (21) are arranged to determine, for each said pair the wavelength of the diffracted signal received by calculation of the center of gravity based on the first signal level and the second signal level and said calibration value.

2. Arrangement according to claim 1, wherein the center of gravity is determined in accordance with the formula:

$$C = \frac{E_j * I(E_j) + (E_j + E_k) * (\frac{N-2}{2}) * I + E_k * I(E_k)}{I(E_j) + (N-2) * I + I(E_k)}$$

3. Arrangement according to claim 1, wherein the beam (8) is adapted with a time invariant optical power, the center of gravity being determined in accordance with the formula:

$$C = \frac{E_j * I(E_j) + (E_j + E_k) * (\frac{Q}{2}) + E_k * I(E_k)}{I(E_j) + Q + I(E_k)}$$

4. Arrangement according to one of the preceding claims, wherein the entrance selection means comprise a slit (4) and said diffractive means comprise a first lens (6) with a predetermined first focal distance and are arranged at a predetermined first distance equal to said first focal distance from said slit (4).

**5.** Arrangement according to claim 4, wherein said diffractive means further comprise a grating (7) as dispersive means arranged to receive an output beam from said first lens (6) and to generate said diffracted signals.

**6.** Arrangement according to claim 4, wherein said diffractive means further comprise a prism (83) as dispersive means arranged to receive an output beam from said first lens (6) and to generate said diffracted signals

**7.** Arrangement according to claim 4, wherein said diffractive means further comprise an holographic element as dispersive means arranged to receive an output beam from said first lens (6) and to generate said diffracted signals.

**8.** Arrangement according to claim 4, wherein said diffractive means further comprise a combination of a grating (7) and a prism (83), or a combination of a grating (7) and an holographic element, as dispersive means arranged to receive an output beam from said first lens (6) and to generate said diffracted signals.

**9.** Arrangement according to claim 4, 5, 6, 7 or 8, wherein said diffractive means further comprise a second lens (9) with a second focal distance, arranged to receive said diffracted signals from said dispersive means and arranged at a predetermined second distance from said detector means (8) equal to said second focal distance.

**10.** Arrangement according to claim 9, wherein said diffractive means comprise a single lens (81) which combines the functionality of said first lens (6) and of said second lens (9), said single lens (81) with a predetermined focal distance, being arranged at a predetermined distance equal to said focal distance from said slit (4), and said single lens (81) being arranged to receive diffracted signals from said dispersive means and at an equal distance from said detector means (8) equal to said focal distance, and said dispersive means being arranged to receive an output beam from said lens (81) and to generate said diffracted signals.

**11.** Arrangement according to claim 10, wherein said diffractive means comprise an optical element (82) which combines the functionality of said first lens (6), of said dispersive means and of said second lens (9), said optical element (82) having a predetermined focal distance, said optical element (82) being arranged at a predetermined distance equal to said focal distance from said slit (4), being arranged to generate diffracted signals, and being arranged at equal distance from said detector means (8) equal to said focal distance

**12.** Arrangement according to any of the preceding claims, wherein said detector means (8) comprise a detector element array, subsequent pairs of the adjacent first detector element and the second detector element having at least one unused detector element (41,42) in between.

**13.** Arrangement according to any of the preceding claims, wherein said processor means (21) is arranged to determine a further physical parameter from said wavelength.

**14.** Arrangement according to any of the preceding claims, wherein said processor means (21) is arranged to monitor said detector output signals during a predetermined time period and to determine wavelength shifts during said time period as a function of time.

**15.** Arrangement according to any of the preceding claims, wherein said entrance selection means (4) is provided with a plurality of slits, each slit being arranged for receiving one of a plurality of different beams.

**16.** A method of optical wavelength analysing comprising the steps of:

- receiving a light beam (3) comprising one or more signals each with its own wavelength having a rectangular shape;
- diffracting each of said signals at an angle dependent on said wavelength;
- receiving said diffracted signals by detector means (8) and generating at least two detector output signals in dependence on the diffracted signals by a plurality of detector elements (32, 33, 35, 36, 38, 39);
- providing a calibration value interrelating a detector element and a wavelength of an image projected on said detector element;
- determining the wavelength of each of said signals from said detector output signals **characterised by**:
- a detector means (8) comprising at lea.st a pair of adjacent first detector element (A) and second detector element (B), the first detector element and the second detector element comprising a plurality of detector devices,
- said beam having a spatial uniform intensity distribution;
- diffracting each of said signals such that

each diffracted signal having a spatially uniform intensity distribution impin.ges on a different pair of adjacent first detector element (A) and second detector element (B) for receiving a first signal portion with a first signal portion level being proportional to a wavelength shift due to the spatial uniform intensity distribution and a second signal portion with a second signal portion level being proportional to the wavelength shift due to the spatial uniform intensity distribution;
each detector element is partially covered by each said signal in a beam shift direction and at least one first exterior detector device of the first detector element and one second exterior detector device of the second detector element are partially illuminated by each of said signals;
the output of said first detector device being related to said first signal portion and the output of said second detector device being related to said second signal portion;
- determining, for each one of said pair, the wavelength of the signal received by calculating the center of gravity based on said first signal portion level and said second signal portion level and said calibration value.

**17.** A method according to claim 16, wherein the center of gravity is determined according to the formula:

$$C = \frac{E_j * I(E_j) + (E_j + E_k) * (\frac{N-2}{2}) * I + E_k * I(E_k)}{I(E_j) + (N-2) * I + I(E_k)}$$

**18.** A method according to claim 16, wherein the beam with a time invariant optical power level is used, the center of gravity being determined in accordance with the formula

$$C = \frac{E_j * I(E_j) + (E_j + E_k) * (\frac{Q}{2}) + E_k * I(E_k)}{I(E_j) + Q + I(E_k)}$$

**19.** A computer arrangement comprising processor means (21) and arranged to receive detector output signals from detector means (8) comprising one or more pair of adjacent first detector element (A) and second detector element (B), for receiving a first signal portion with a first signal portion level being proportional to a wavelength shift due to a spatially uniform intensity distribution of a rectangular impinging beam (3) and a second signal portion with a second signal level being proportional to the wavelength shift due to the spatially uniform intensity distribution of the rectangular beam (3), respectively, whereby
the first detector element (A) and the second detector element (B) comprising a plurality of respective detector devices;
each detector element is partially covered by each said signal portion in a beam shift direction and at least one exterior detector device of the first detector element and one exterior detector device of the second detector element are partially illuminated by each of said signal portions
the arrangement being programmed to determine, for each one of said pairs the wavelength of the signal received in dependence on the center of gravity of first signal portion level and the second signal portion level and using a calibration value interrelating a detector element and a wavelength of an image projected on said detector element.

**20.** A computer program product to be loaded by a computer and being arranged to cause a processor of the computer to carry out the steps of the method according to any preceding claim 16 - 18.

**21.** A data carrier provided with a computer program product as claimed in claim 20.

## Patentansprüche

**1.** Anordnung zur optischen Analyse von Wellenlängen mit:

- einem Eintrittsauswahlmittel (4) zum Empfangen eines Lichtstrahls (3), der ein oder mehrere Signale, jedes mit seiner eigenen Wellenlänge, beinhaltet, und zum Durchlassen von zumindest einem Teil des Strahls (3);
- Diffraktionsmitteln (6, 7, 9), die ausgestaltet sind, um den mindestens einen Teil des Strahls (3) zu empfangen, der durch das Eintrittsauswahlmittel (4) durchgelassen wird, und um jedes der Signale mit einem von der Wellenlänge abhängigen Winkel zu beugen;
- Detektormitteln (8), die ausgestaltet sind, um die gebeugten Signale zu empfangen und um in Abhängigkeit von den gebeugten Signalen ein oder mehrere Detektorausgangssignale zu erzeugen;
- Verarbeitungsmitteln (21), die mit den Detektormitteln verbunden sind, um die Detektorausgangssignale zu empfangen und um die Wellenlänge von jedem der Signale und einen Kalibrierungswert zu bestimmen, der verwendet wird, um ein Detektorelement und eine Wellenlänge von einem Bild des Eintrittsauswahlmittels, das auf das Detektorelement projiziert wird, in Beziehung zu setzen;

**dadurch gekennzeichnet, dass:**

- das Eintrittsauswahlmittel (4) ausgestaltet ist, um einen Strahl mit einer räumlich gleichförmigen Intensitätsverteilung auszugeben, der eine rechteckige Form hat;
- die Detektormittel (8) mindestens ein Paar von einem ersten Detektorelement (32, 35, 38) und einem zweiten Detektorelement (33, 36, 39) aufweist, die benachbart sind, wobei das erste und das zweite Detektorelement eine Mehrzahl von Detektorvorrichtungen aufweisen;
- die Diffraktionsmittel (6, 7, 9) ausgestaltet sind, um jedes der Signale so zu beugen, dass jedes gebeugte Signal mit einer räumlich gleichförmigen Intensitätsverteilungen auf verschiedene Detektorelemente trifft, so dass jedes Detektorelement durch jedes gebeugte Signal in einer Richtung einer Strahlverschiebung überdeckt wird und mindestens eine erste äußere Detektorvorrichtung des ersten Detektorelements und eine zweite äußere Detektorvorrichtung des zweiten Detektorelements in der Strahlverschiebungsrichtung durch jedes der gebeugten Signale teilweise beleuchtet werden;
- das erste Detektorelement (32; 33; 35; 36; 38; 39) ausgestaltet ist, um mindestens einen ersten Signalbereich mit einem ersten Signalbereichspegel zu empfangen, der infolge der räumlich gleichmäßigen Intensitätsverteilung proportional zu einer Wellenlängenverschiebung ist, wobei die Ausgabe der ersten Detektorvorrichtung mit dem ersten Signalbereich in Beziehung steht;
- das zweite Detektorelement ausgestaltet ist, um einen zweiten Signalbereich mit einem zweiten Signalbereichspegel zu empfangen, der infolge der räumlich gleichförmigen Intensitätsverteilung proportional zu der Wellenlängenverschiebung ist, wobei die Ausgabe der zweiten Detektorvorrichtung des zweiten Detektorelements mit dem zweiten Signalbereich in Beziehung steht; wobei
- die Verarbeitungsmittel (21) ausgestaltet sind, um für jedes Paar die Wellenlänge des empfangenen gebeugten Signals zu bestimmen, und zwar durch Berechnung des Schwerpunkts basierend auf dem ersten Signalpegel und dem zweiten Signalpegel und dem Kalibrierungswert.

2. Anordnung nach Anspruch 1, bei der der Schwerpunkt gemäß folgender Formel berechnet wird:

$$C = \frac{E_j * I(E_j) + (E_j + E_k) * \left(\frac{N-2}{2}\right) * I + E_k * I(E_k)}{I(E_j) + (N-2) * I + I(E_k)}$$

3. Anordnung nach Anspruch 1, bei der der Strahl (8) mit einer zeitlich nicht variablen optischen Leistung ausgestaltet ist, wobei der Schwerpunkt gemäß folgender Formel berechnet wird:

$$C = \frac{E_j * I(E_j) + (E_j + E_k) * \left(\frac{Q}{2}\right) + E_k * I(E_k)}{I(E_j) + Q + I(E_k)}$$

4. Anordnung nach einem der vorhergehenden Ansprüche, bei der das Einlassauswahlmittel einen Schlitz (4) aufweist und die Diffraktionsmittel eine erste Linse (6) mit einer vorbestimmten ersten Brennweite aufweisen und mit einer vorbestimmten ersten Distanz, die gleich der ersten Brennweite ist, von dem Schlitz (4) angeordnet sind.

5. Anordnung nach Anspruch 4, bei der die Diffraktionsmittel außerdem ein Gitter (7) als Diffraktionsmittel aufweisen, das ausgestaltet ist, um einen Ausgangsstrahl von der ersten Linse (6) zu empfangen und um die gebeugten Signale zu erzeugen.

**6.** Anordnung nach Anspruch 4, bei der die Diffraktionsmittel außerdem ein Prisma (83) als Diffraktionsmittel aufweisen, das ausgestaltet ist, um einen Ausgangsstrahl von der ersten Linse (6) zu empfangen und um die gebeugten Signale zu erzeugen.

**7.** Anordnung nach Anspruch 4, bei der die Diffraktionsmittel außerdem ein holographisches Element als Diffraktionsmittel aufweisen, das ausgestaltet ist, um einen Ausgangsstrahl von der ersten Linse (6) zu empfangen und um die gebeugten Signale zu erzeugen.

**8.** Anordnung nach Anspruch 4, bei der die Diffraktionsmittel außerdem eine Kombination aus einem Gitter (7) und einem Prisma (83), oder eine Kombination aus einem Gitter (7) und einem holographischen Element, als Diffraktionsmittel aufweisen, die ausgestaltet ist, um einen Ausgangsstrahl von der ersten Linse (6) zu empfangen und um die gebeugten Signale zu erzeugen.

**9.** Anordnung nach Anspruch 4, 5, 6, 7 oder 8, bei der die Diffraktionsmittel außerdem eine zweite Linse (9) mit einer zweiten Brennweite aufweisen, die ausgestaltet ist, um die gebeugten Signale von den Diffraktionsmitteln zu empfangen, und mit einer vorbestimmten zweiten Distanz von den Detektormitteln (8) angeordnet ist, die gleich der zweiten Brennweite ist.

**10.** Anordnung nach Anspruch 9, bei der die Diffraktionsmittel eine einzige Linse (81) aufweisen, die die Funktionalität der ersten Linse (6) und der zweiten Linse (9) kombiniert, wobei diese einzige Linse (81), die eine vorbestimmte Brennweite hat, mit einer vorbestimmten Distanz, die gleich der Brennweite ist, von dem Schlitz (4) angeordnet ist, und bei der diese einzige Linse (81) ausgestaltet ist, um gebeugte Signale von den Diffraktionsmitteln zu empfangen, und mit einer gleichen Distanz von den Detektormitteln (8) angeordnet ist, die gleich der Brennweite ist, und bei der die Diffraktionsmittel ausgestaltet sind, um einen Ausgangsstrahl von dieser Linse (81) zu empfangen und um die gebeugten Signale zu erzeugen.

**11.** Anordnung nach Anspruch 10, bei der die Diffraktionsmittel ein optisches Element (82) aufweisen, das die Funktionalität der ersten Linse (6), der Diffraktionsmittel und der zweiten Linse (9) kombiniert, wobei das optische Element (82) eine vorbestimmte Brennweite hat und das optische Element (82) mit einer vorbestimmten Distanz, die gleich der Brennweite ist, von dem Schlitz (4) angeordnet ist, ausgestaltet ist, um gebeugte Signale zu erzeugen und mit einer gleichen Distanz, die gleich der Brennweite ist, von den Detektormitteln (8) angeordnet ist.

**12.** Anordnung nach einem der vorhergehenden Ansprüche, bei der die Detektormittel (8) ein Detektorelement-Array aufweisen, wobei aufeinander folgende Paare des benachbarten ersten Detektorelements und des zweiten Detektorelements dazwischen mindestens ein nicht genutztes Detektorelement (41, 42) haben.

**13.** Anordnung nach einem der vorhergehenden Ansprüche, bei der die Verarbeitungsmittel (21) ausgestaltet sind, um einen weiteren physikalischen Parameter aus der Wellenlänge zu bestimmen.

**14.** Anordnung nach einem der vorhergehenden Ansprüche, bei der die Verarbeitungsmittel (21) ausgestaltet sind, um die Detektorausgangssignale während einer vorbestimmten Zeitperiode zu überwachen und um die Wellenlängenverschiebungen während dieser Zeitperiode als eine Funktion der Zeit zu bestimmen.

**15.** Anordnung nach einem der vorhergehenden Ansprüche, bei der das Eintrittsauswahlmittel (4) mit einer Mehrzahl von Schlitzen versehen ist, wobei jeder Schlitz ausgestaltet ist, um einen von einer Mehrzahl von verschiedenen Strahlen zu empfangen.

**16.** Verfahren zur optischen Analyse von Wellenlängen, mit den Schritten:

- Empfangen eines Lichtstrahls (3), der ein oder mehrere Signale, jedes mit seiner eigenen Wellenlänge, beinhaltet, mit einer rechteckigen Form;
- Brechen von jedem der Signale mit einem Winkel abhängig von dieser Wellenlänge;
- Empfangen der gebeugten Signale durch Detektormittel (8) und Erzeugen von mindestens zwei Detektorausgangssignalen in Abhängigkeit von den gebeugten Signalen durch eine Mehrzahl von Detektorelementen (32, 33, 35, 36, 38, 39);

- Bereitstellen eines Kalibrierungswerts, der ein Detektorelement und eine Wellenlänge von einem Bild in Beziehung setzt, das auf das Detektorelement projiziert wird;
- Bestimmen der Wellenlänge von jedem der Signale aus den Detektorausgangssignalen, **gekennzeichnet durch:**
- ein Detektormittel (8), das mindestens ein Paar aus einem ersten Detektorelement (A) und einem zweiten Detektorelement (B) aufweist, die benachbart sind, wobei das erste Detektorelement und das zweite Detektorelement eine Mehrzahl von Detektorvorrichtungen aufweisen;
- wobei der Strahl eine räumlich gleichförmige Intensitätsverteilung hat;
- Beugen von jedem der Signale, so dass
- jedes gebeugte Signal, das eine räumlich gleichförmige Intensitätsverteilung hat, auf ein verschiedenes Paar von einem ersten Detektorelement (A) und einem zweiten Detektorelement (B), die benachbart sind, trifft, um einen ersten Signalbereich mit einem ersten Signalbereichspegel, der infolge der räumlich gleichförmigen Intensitätsverteilung proportional zu einer Wellenlängenverschiebung ist, und einen zweiten Signalbereich mit einem zweiten Signalbereichspegel zu empfangen, der infolge der räumlich gleichförmigen Intensitätsverteilung proportional zu der Wellenlängenverschiebung ist;
- wobei jedes Detektorelement **durch** jedes der Signale in einer Strahlverschiebungsrichtung teilweise überdeckt ist und mindestens eine erste äußere Detektorvorrichtung des erste Detektorelements und eine zweite äußere Detektorvorrichtung des zweiten Detektorelements teilweise **durch** jedes der Signale beleuchtet wird;
- wobei die Ausgabe von der ersten Detektorvorrichtung mit dem ersten Signalbereich in Beziehung gesetzt wird und die Ausgabe von der zweiten Detektorvorrichtung mit dem zweiten Signalbereich in Beziehung gesetzt wird;
- Bestimmen, für jedes von diesem Paar, der Wellenlänge des empfangenen Signals **durch** Berechnung des Schwerpunkts basierend auf dem ersten Signalbereichspegel und dem zweiten Signalbereichspegel und dem Kalibrierungswert.

**17.** Verfahren nach Anspruch 16, bei dem der Schwerpunkt durch folgende Formel bestimmt wird:

$$C = \frac{E_j * I(E_j) + (E_j + E_k) * \left(\frac{N-2}{2}\right) * I + E_k * I(E_k)}{I(E_j) + (N-2) * I + I(E_k)}$$

**18.** Verfahren nach Anspruch 16, bei dem der Strahl mit einem zeitlich nicht variablen optischen Leistungspegel verwendet wird, wobei der Schwerpunkt gemäß der folgenden Formel bestimmt wird:

$$C = \frac{E_j * I(E_j) + (E_j + E_k) * \left(\frac{Q}{2}\right) + E_k * I(E_k)}{I(E_j) + Q + I(E_k)}$$

**19.** Computer-Anordnung mit Verarbeitungsmitteln (21), die ausgestaltet sind, um Detektorausgangssignale von Detektormitteln (8) zu empfangen, mit einem oder mehreren Paaren von einem ersten Detektorelement (A) und einem zweiten Detektorelement (B), die benachbart sind, zum Empfangen eines ersten Signalbereichs mit einem ersten Signalbereichspegel, der infolge einer räumlich gleichförmigen Intensitätsverteilung eines rechteckigen auftreffenden Strahls (3) proportional zu einer Wellenlängenverschiebung ist, und eines zweiten Signalbereichs mit einem zweiten Signalpegel, der infolge der räumlich gleichförmigen Intensitätsverteilung des rechteckigen Strahls (3) proportional zu der Wellenlängenverschiebung ist, wobei

- das erste Detektorelement (A) und das zweite Detektorelement (B) eine Mehrzahl von zugehörigen Detektorvorrichtungen aufweisen;
- jedes Detektorelement durch jeden der Signalbereiche in einer Strahlverschiebungsrichtung teilweise überdeckt wird und mindestens eine äußere Detektorvorrichtung des ersten Detektorelements und eine äußere Detektorvorrichtung des zweiten Detektorelements durch jeden der Signalbereiche teilweise beleuchtet werden;

- die Anordnung programmiert ist, um für jedes der Paare die Wellenlängen der empfangenen Signale in Abhängigkeit von dem Schwerpunkt des ersten Signalbereichspegels und des zweiten Signalbereichspegels zu bestimmen, und Verwenden eines Kalibrierungswerts, der ein Detektorelement und eine Wellenlänge eines Bildes, das auf das Detektorelement projiziert wird, in Beziehung setzt.

**20.** Computerprogrammprodukt, um durch einen Computer geladen zu werden, das ausgestaltet ist, um zu bewirken, dass ein Prozessor des Computers die Schritte des Verfahrens nach einem der vorhergehenden Ansprüche 16-18 durchführt.

**21.** Datenträger, das mit einem Computerprogrammprodukt nach Anspruch 20 versehen ist.

**Revendications**

**1.** Système d'analyse de longueurs d'ondes optiques, comprenant :

- des moyens de sélection d'entrée (4) destinés à recevoir un faisceau lumineux (3), comprenant un ou plusieurs signaux dont chacun possède sa propre longueur d'onde, et à laisser passer au moins une partie dudit faisceau (3) ;
- des moyens de diffraction (6, 7, 9) disposés de façon à recevoir ladite ou lesdites partie(s) dudit faisceau (3) ayant traversé les moyens de sélection d'entrée (4) et à diffracter chacun desdits signaux selon un angle qui est fonction de ladite longueur d'onde ;
- des moyens de détection (8) disposés de façon à recevoir lesdits signaux diffractés et à générer un ou plusieurs signaux de sortie de détecteurs en fonction des signaux diffractés ;
- des moyens de traitement (21) connectés auxdits moyens de détection afin de recevoir lesdits signaux de sortie de détecteurs et déterminer la longueur d'onde de chacun desdits signaux et une valeur d'étalonnage conçue pour établir une relation entre un élément détecteur et une longueur d'onde d'une image des moyens de sélection d'entrée projetée sur ledit élément détecteur ;

**caractérisé en ce que :**

- lesdits moyens de sélection d'entrée (4) sont disposés de façon à délivrer à leur sortie un faisceau qui présente une distribution spatiale uniforme de l'intensité ayant une forme rectangulaire ;
- lesdits moyens de détection (8) comprennent au moins une paire constituée d'un premier élément détecteur (32, 35, 38) et d'un deuxième élément détecteur (33, 36, 39) adjacents, le premier élément détecteur et le deuxième élément détecteur comprenant une pluralité de dispositifs de détection ;
- lesdits moyens de diffraction (6, 7, 9) sont disposés de façon à diffracter chacun desdits signaux de telle manière que chaque signal diffracté ayant une distribution spatiale uniforme de l'intensité vienne frapper des éléments détecteurs différents, de sorte que chaque élément détecteur est partiellement couvert par chacun desdits signaux diffractés dans un sens de décalage du faisceau et au moins un premier dispositif de détection extérieur du premier élément détecteur et un deuxième dispositif de détection extérieur du deuxième élément détecteur sont partiellement éclairés dans le sens de décalage du faisceau par chacun desdits signaux diffractés ;
- le premier élément détecteur (32 ; 33 ; 35 ; 36 ; 38 ; 39) étant disposé de façon à recevoir au moins une première partie de signal avec un niveau de première partie de signal qui est proportionnel à un décalage de longueur d'onde dû à la distribution spatiale uniforme de l'intensité, la sortie dudit premier dispositif de détection étant liée à ladite première partie de signal ;
- le deuxième élément détecteur étant disposé de façon à recevoir une deuxième partie de signal avec un niveau de deuxième partie de signal qui est proportionnel au décalage de longueur d'onde dû à la distribution spatiale uniforme de l'intensité, la sortie dudit deuxième dispositif de détection du deuxième élément détecteur étant liée à ladite deuxième partie de signal ; dans lequel
- lesdits moyens de traitement (21) sont disposés de façon à déterminer pour chacune desdites paires la longueur d'onde du signal diffracté reçu en calculant le centre de gravité sur la base du niveau du premier signal, du niveau du deuxième signal et de ladite valeur d'étalonnage.

**2.** Système selon la revendication 1, dans lequel le centre de gravité est déterminé au moyen de la formule :

$$C = \frac{E_j * I(E_j) + (E_j + E_k) * \left(\frac{N-2}{2}\right) * I + E_k * I(E_k)}{I(E_j) + (N-2) * I + I(E_k)}$$

**3.** Système selon la revendication 1, dans lequel le faisceau (8) est adapté avec une puissance optique invariante dans le temps, le centre de gravité étant déterminé au moyen de la formule :

$$C = \frac{E_j * I(E_j) + (E_j + E_k) * \left(\frac{Q}{2}\right) + E_k * I(E_k)}{I(E_j) + Q + I(E_k)}$$

**4.** Système selon l'une des revendications précédentes, dans lequel les moyens de sélection d'entrée comprennent une fente (4) et lesdits moyens de diffraction comprennent une première lentille (6) ayant une première distance focale prédéterminée et sont disposés à une première distance prédéterminée égale à ladite première distance focale par rapport à ladite fente (4).

**5.** Système selon la revendication 4, dans lequel lesdits moyens de diffraction comprennent en plus un réseau de diffraction (7) en tant que moyen de dispersion disposé de façon à recevoir un faisceau de sortie de ladite première lentille (6) et à générer lesdits signaux diffractés.

**6.** Système selon la revendication 4, dans lequel lesdits moyens de diffraction comprennent en plus un prisme (83) en tant que moyen de dispersion disposé de façon à recevoir un faisceau de sortie de ladite première lentille (6) et à générer lesdits signaux diffractés.

**7.** Système selon la revendication 4, dans lequel lesdits moyens de diffraction comprennent en plus un élément holographique en tant que moyen de dispersion disposé de façon à recevoir un faisceau de sortie de ladite première lentille (6) et à générer lesdits signaux diffractés.

**8.** Système selon la revendication 4, dans lequel lesdits moyens de diffraction comprennent en plus une combinaison d'un réseau de diffraction (7) et d'un prisme (83) ou une combinaison d'un réseau de diffraction (7) et d'un élément holographique en tant que moyens de dispersion disposés de façon à recevoir un faisceau de sortie de ladite première lentille (6) et à générer lesdits signaux diffractés.

**9.** Système selon la revendication 4, 5, 6, 7 ou 8, dans lequel lesdits moyens de diffraction comprennent en plus une deuxième lentille (9) ayant une deuxième distance focale qui est disposée de façon à recevoir lesdits signaux diffractés desdits moyens de dispersion et disposée à une deuxième distance prédéterminée égale à ladite deuxième distance focale par rapport auxdits moyens de détection (8).

**10.** Système selon la revendication 9, dans lequel lesdits moyens de diffraction comprennent une lentille unique (81) qui combine la fonctionnalité de ladite première lentille (6) et celle de ladite deuxième lentille (9), ladite lentille unique (81) ayant une distance focale prédéterminée et étant disposée à une distance prédéterminée égale à ladite distance focale par rapport à ladite fente (4) et ladite lentille unique (81) étant disposée de façon à recevoir les signaux diffractés desdits moyens de dispersion et à une distance égale à ladite distance focale par rapport auxdits moyens de détection (8), et lesdits moyens de dispersion étant disposés de façon à recevoir un faisceau de sortie de ladite lentille (81) et à générer lesdits signaux diffractés.

**11.** Système selon la revendication 10, dans lequel lesdits moyens de diffraction comprennent un élément optique (82) qui combine la fonctionnalité de ladite première lentille (6), celle desdits moyens de dispersion et celle de ladite deuxième lentille (9), ledit élément optique (82) ayant une distance focale prédéterminée, ledit élément optique (82) étant disposé à une distance prédéterminée égale à ladite distance focale par rapport à ladite fente (4), disposé de façon à générer des signaux diffractés et disposé à une distance égale à ladite distance focale par rapport auxdits moyens de détection (8).

**12.** Système selon l'une quelconque des revendications précédentes, dans lequel lesdits moyens de détection (8) comprennent un réseau d'éléments détecteurs, des paires successives du premier élément détecteur et du deuxième élément détecteur adjacents étant séparées par au moins un élément détecteur inutilisé (41, 42).

**13.** Système selon l'une quelconque des revendications précédentes, dans lequel lesdits moyens de traitement (21) sont disposés de façon à déterminer un autre paramètre physique de ladite longueur d'onde.

**14.** Système selon l'une quelconque des revendications précédentes, dans lequel lesdits moyens de traitement (21) sont disposés de façon à contrôler lesdits signaux de sortie de détecteurs pendant une durée prédéterminée et à déterminer pendant cette durée des décalages de longueur d'onde en fonction du temps.

**15.** Système selon l'une quelconque des revendications précédentes, dans lequel lesdits moyens de sélection d'entrée (4) sont dotés d'une pluralité de fentes, chaque fente étant disposée de façon à recevoir un faisceau parmi une pluralité de faisceaux différents.

**16.** Procédé d'analyse de longueurs d'onde optiques, comprenant les étapes consistant à :

- recevoir un faisceau lumineux (3) comprenant un ou plusieurs signaux dont chacun possède sa propre longueur d'onde et présente une forme rectangulaire ;
- diffracter chacun desdits signaux selon un angle dépendant de ladite longueur d'onde ;
- recevoir lesdits signaux diffractés par des moyens de détection (8) et générer au moins deux signaux de sortie de détecteurs en fonction des signaux diffractés par une pluralité d'éléments détecteurs (32, 33, 35, 36, 38, 39) ;
- obtenir une valeur d'étalonnage qui établit une relation entre un élément détecteur et une longueur d'onde d'une image projetée sur ledit élément détecteur ;
- déterminer la longueur d'onde de chacun desdits signaux de sortie de détecteurs ;

**caractérisé par** :

- des moyens de détection (8) comprenant au moins une paire d'un premier élément détecteur (A) et d'un deuxième élément détecteur (B) adjacents, le premier élément détecteur et le deuxième élément détecteur comprenant une pluralité de dispositifs de détection ;
ledit faisceau ayant une distribution spatiale uniforme de l'intensité ;
- diffracter chacun desdits signaux de telle manière que
chaque signal diffracté ayant une distribution spatiale uniforme de l'intensité vienne frapper une paire différente d'un premier élément détecteur (A) et d'un deuxième élément détecteur (B) adjacents de façon à recevoir une première partie de signal avec un niveau de première partie de signal qui est proportionnel à un décalage de longueur d'onde dû à la distribution spatiale uniforme de l'intensité et une deuxième partie de signal avec un niveau de deuxième partie de signal qui est proportionnel au décalage de longueur d'onde dû à la distribution spatiale uniforme de l'intensité ;
chaque élément détecteur est partiellement couvert par chacun des signaux dans un sens de décalage du faisceau et au moins un premier dispositif de détection extérieur du premier élément détecteur et un deuxième dispositif de détection extérieur du deuxième élément détecteur sont partiellement éclairés par chacun desdits signaux ;
la sortie dudit premier dispositif de détection étant liée à ladite première partie de signal et la sortie dudit deuxième dispositif de détection étant liée à ladite deuxième partie de signal ;
- déterminer pour chacune desdites paires la longueur d'onde du signal reçu en calculant le c entre de gravité sur la base dudit niveau de première partie de signal, dudit niveau de deuxième partie de signal et de ladite valeur d'étalonnage.

**17.** Procédé selon la revendication 16, dans lequel le centre de gravité est déterminé au moyen de la formule :

$$C = \frac{E_j * I(E_j) + (E_j + E_k) * \left(\frac{N-2}{2}\right) * I + E_k * I(E_k)}{I(E_j) + (N-2) * I + I(E_k)}$$

**18.** Procédé selon la revendication 16, dans lequel le faisceau ayant un niveau de puissance optique invariant dans le temps est utilisé, le centre de gravité étant déterminé au moyen de la formule :

$$C = \frac{E_j * I(E_j) + (E_j + E_k) * \left(\frac{Q}{2}\right) + E_k * I(E_k)}{I(E_j) + Q + I(E_k)}$$

**19.** Système informatique comprenant des moyens de traitement (21) et disposé de façon à recevoir des signaux de sortie de détecteurs délivrés par des moyens de détection (8), comprenant une ou plusieurs paires d'un premier élément détecteur (A) et d'un deuxième élément détecteur (B) adjacents, destinés à recevoir une première partie de signal avec un niveau de première partie de signal qui est proportionnel à un décalage de longueur d'onde dû à une distribution spatiale uniforme de l'intensité d'un faisceau incident rectangulaire (3) et une deuxième partie de signal avec un niveau de deuxième signal qui est proportionnel au décalage de longueur d'onde dû à la distribution spatiale uniforme de l'intensité du faisceau rectangulaire (3), respectivement, dans lequel
le premier élément détecteur (A) et le deuxième élément détecteur (B) comprennent une pluralité de dispositifs de détection respectifs ;
chaque élément détecteur est partiellement couvert par chacune desdites parties de signal dans un sens de décalage du faisceau et au moins un dispositif de détection extérieur du premier élément détecteur et un dispositif de détection extérieur du deuxième élément détecteur sont partiellement éclairés par chacune desdites parties de signal ;
le système étant programmé afin de déterminer pour chacune desdites paires la longueur d'onde du signal reçu en fonction du centre de gravité du niveau de la première partie de signal et du niveau de la deuxième partie de signal et en utilisant une valeur d'étalonnage qui établit une relation entre un élément détecteur et une longueur d'onde d'une image projetée sur ledit élément détecteur.

**20.** Produit logiciel informatique destiné à être chargé par un ordinateur et agencé pour faire exécuter à un processeur de l'ordinateur les étapes du procédé selon l'une quelconque des revendications 16 à 18 précédentes.

**21.** Support de données contenant un produit logiciel informatique selon la revendication 20.

fig-1

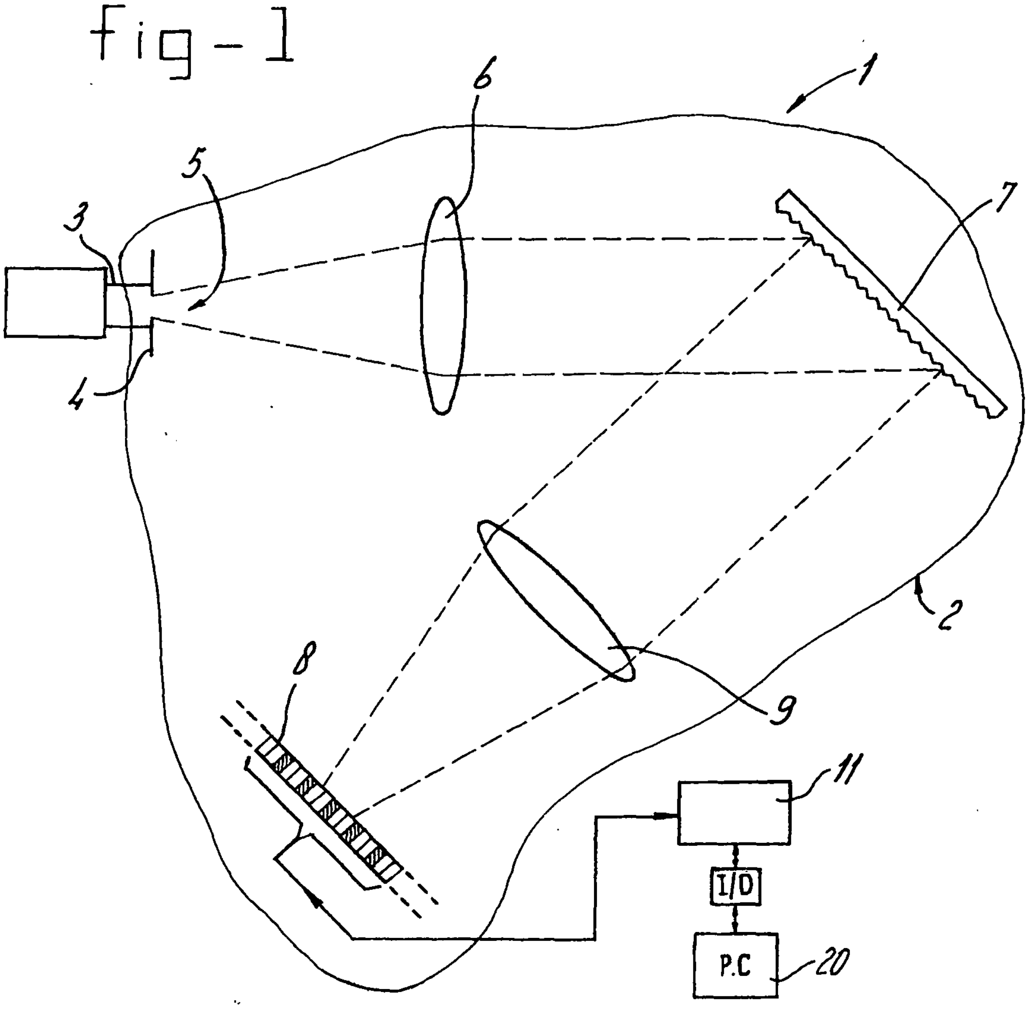
1
2
3
4
5
6
7
8
9
11
I/D
P.C
20

fig-2

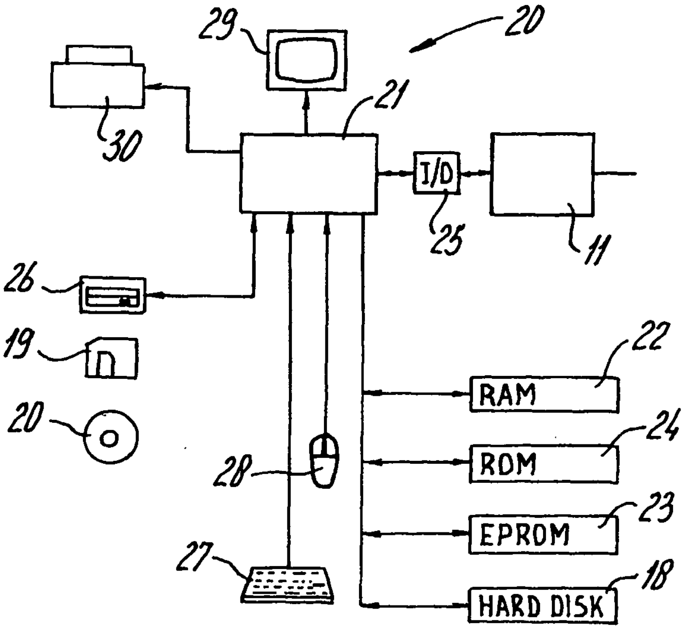
20
29
21
30
I/D
25
11
26
19
20
22
RAM
24
ROM
28
23
EPROM
27
18
HARD DISK

fig-3

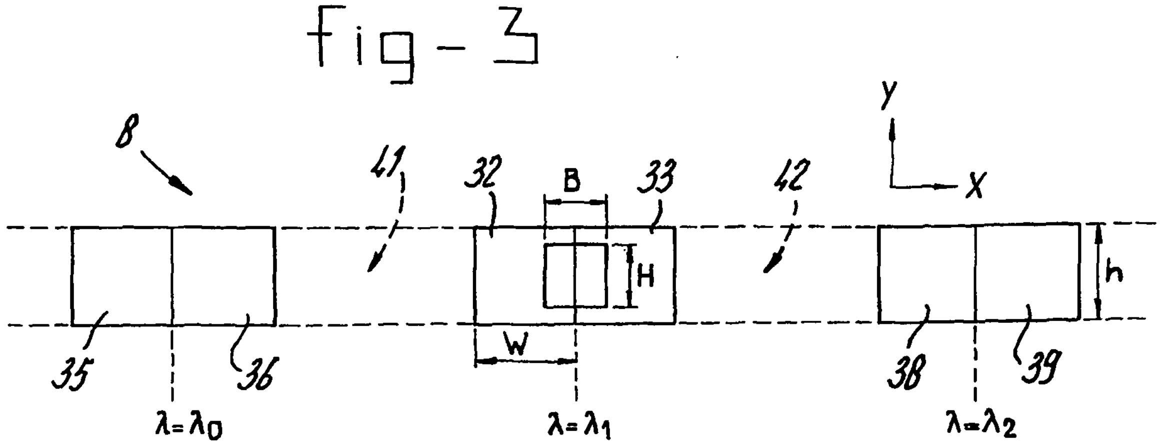


fig-4a

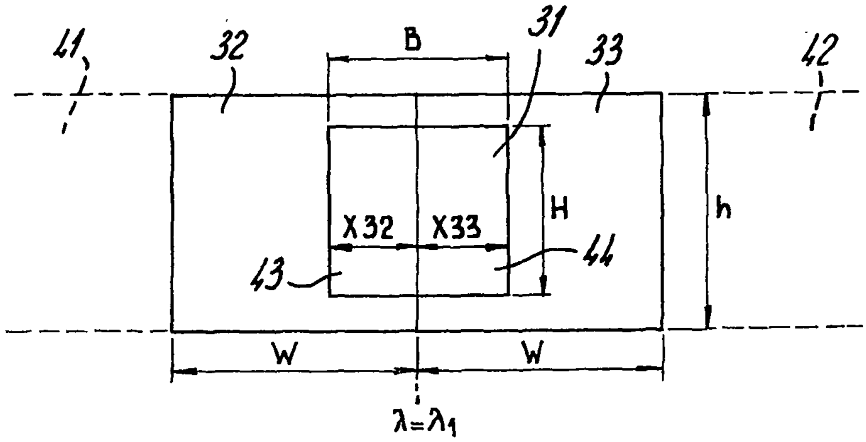


fig-4b

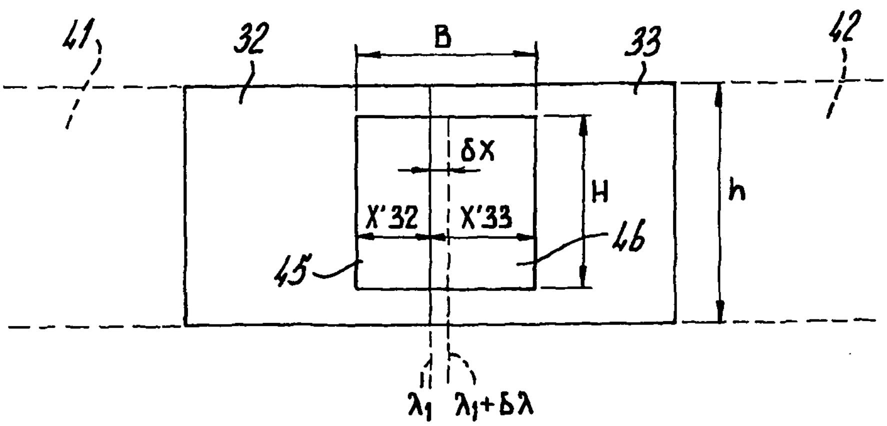

fig-5

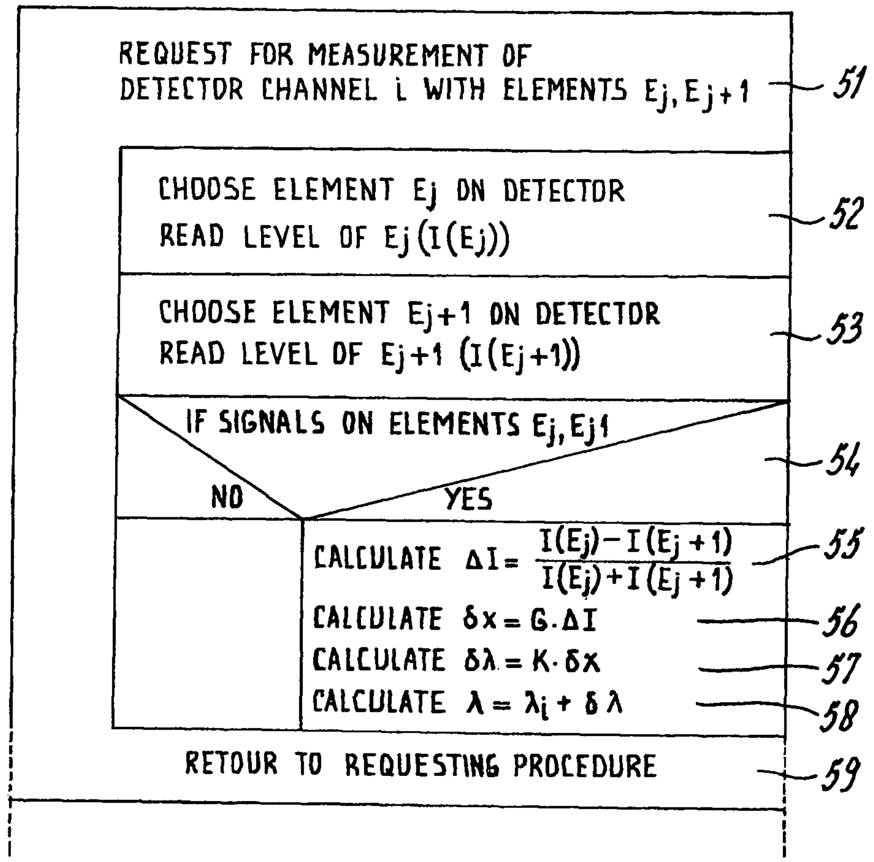
REQUEST FOR MEASUREMENT OF
DETECTOR CHANNEL i WITH ELEMENTS Ej, Ej+1
51
CHOOSE ELEMENT Ej ON DETECTOR
READ LEVEL OF Ej (I(Ej))
52
CHOOSE ELEMENT Ej+1 ON DETECTOR
READ LEVEL OF Ej+1 (I(Ej+1))
53
IF SIGNALS ON ELEMENTS Ej, Ej1
NO
YES
54
CALCULATE $\Delta I = \frac{I(Ej) - I(Ej+1)}{I(Ej) + I(Ej+1)}$
55
CALCULATE $\delta x = G \cdot \Delta I$
56
CALCULATE $\delta\lambda = K \cdot \delta x$
57
CALCULATE $\lambda = \lambda_i + \delta\lambda$
58
RETOUR TO REQUESTING PROCEDURE
59

fig-6

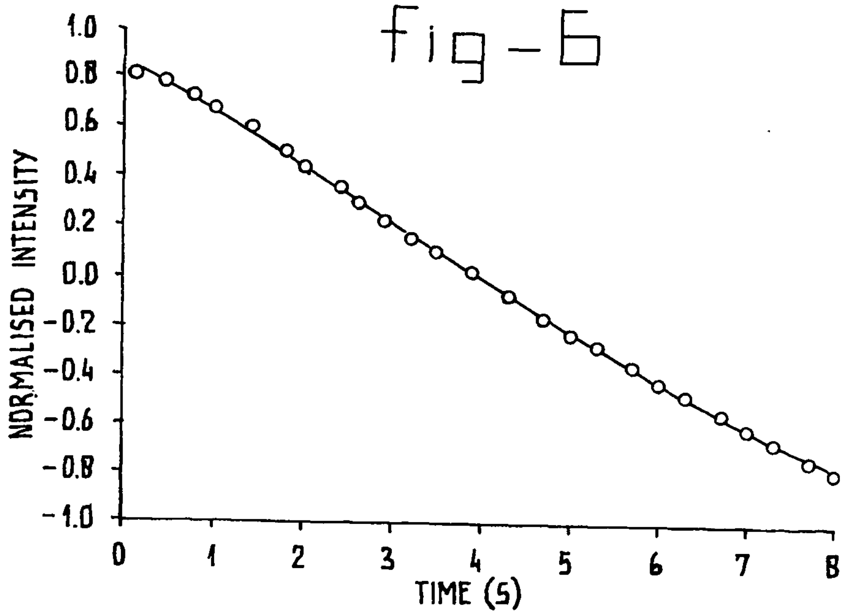
NORMALISED INTENSITY
1.0
0.8
0.6
0.4
0.2
0.0
-0.2
-0.4
-0.6
-0.8
-1.0
0
1
2
3
4
5
6
7
8
TIME (S)

Fig 7

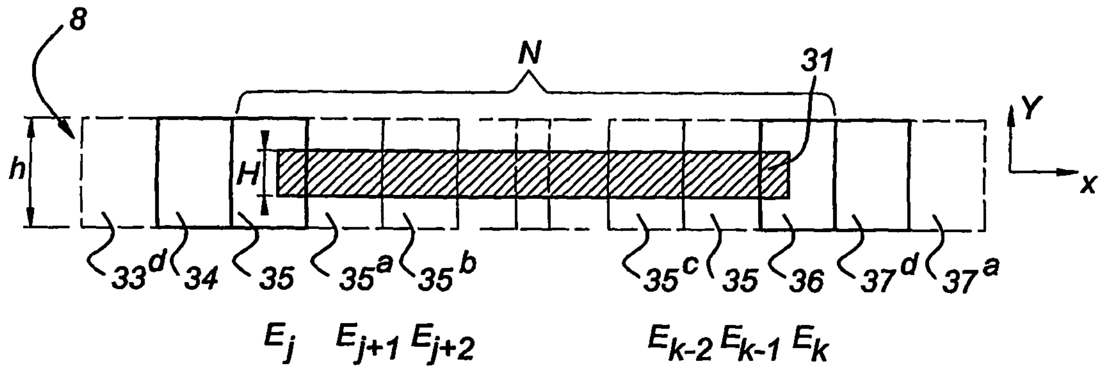
8
N
31
h
H
Y
x
33d
34
35
35a
35b
35c
35
36
37d
37a
Ej
Ej+1
Ej+2
Ek-2
Ek-1
Ek

Fig 8

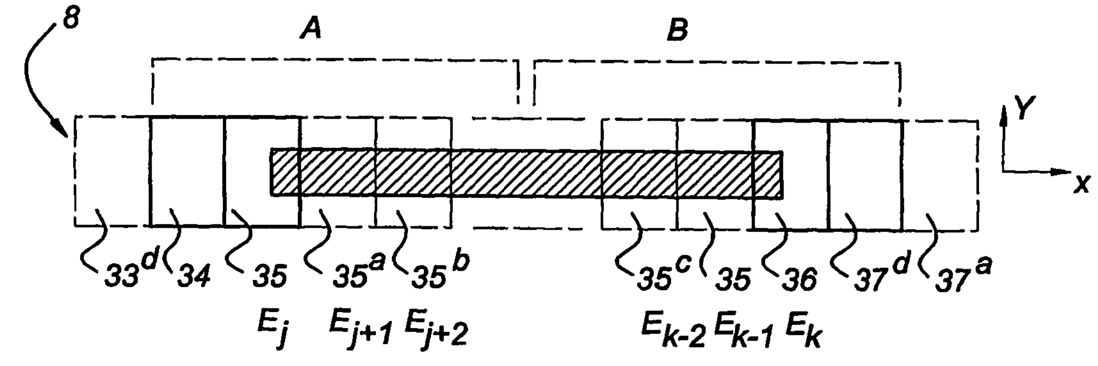
8
A
B
Y
x
33d
34
35
35a
35b
35c
35
36
37d
37a
Ej
Ej+1
Ej+2
Ek-2
Ek-1
Ek

Fig 9

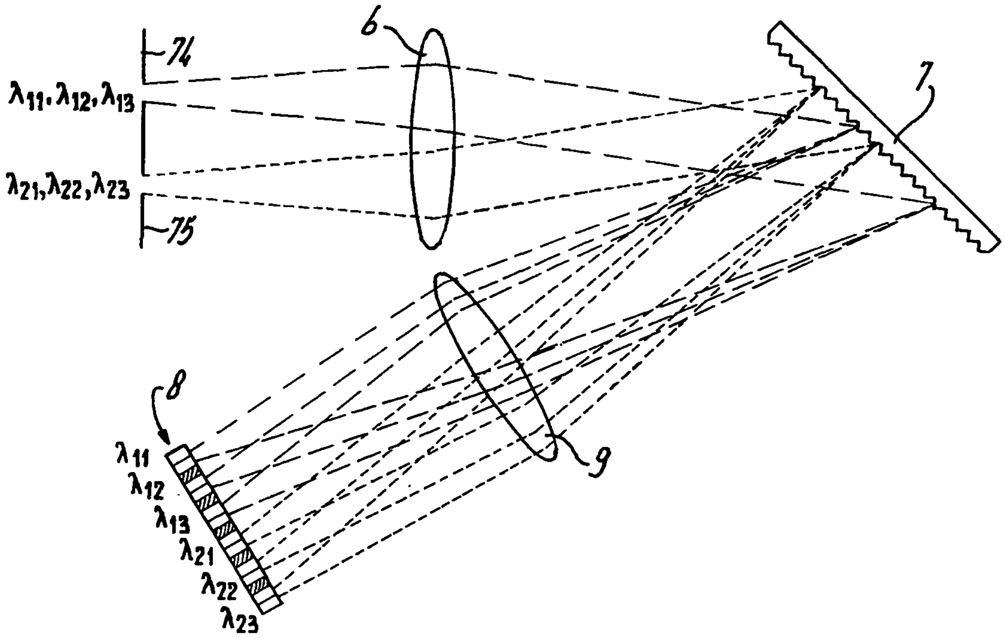


Fig 10a

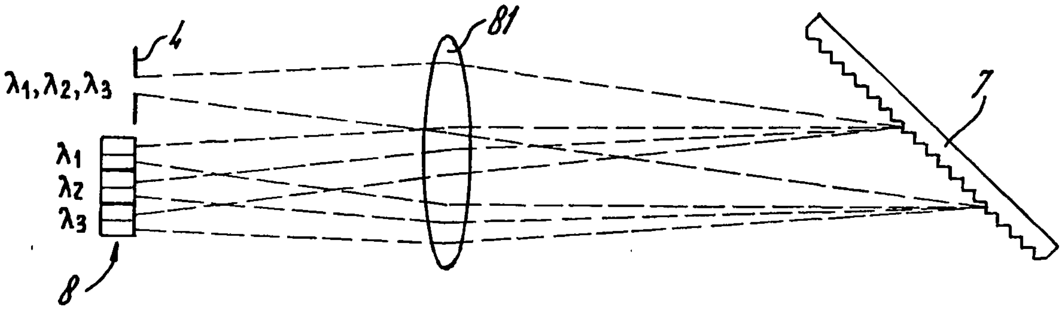


Fig 10b

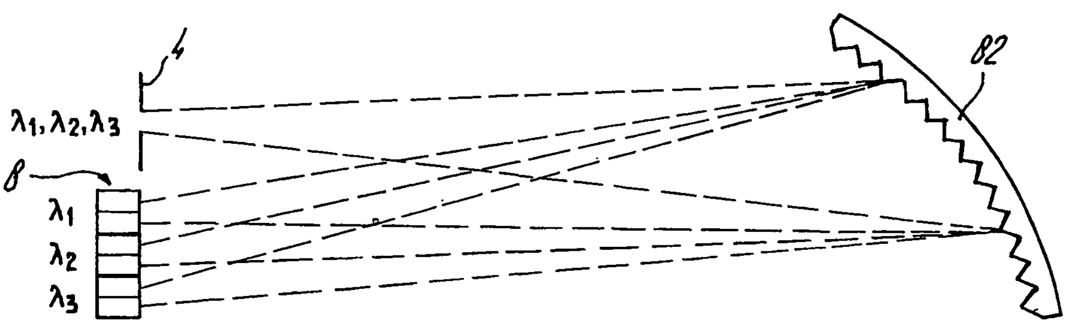

Fig 10c

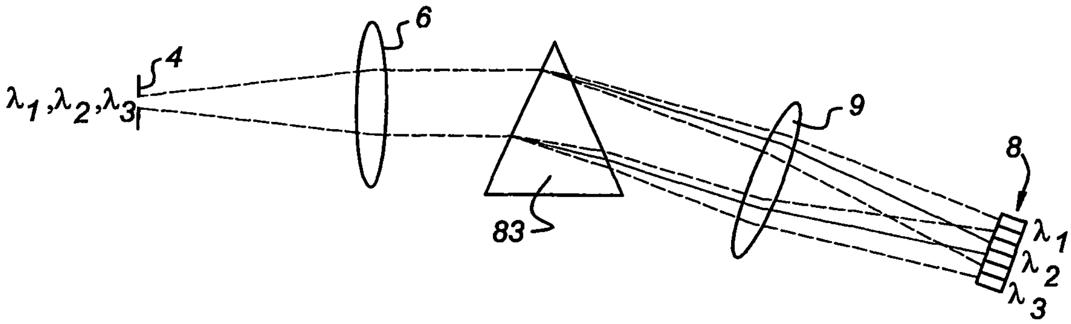


Fig 10d

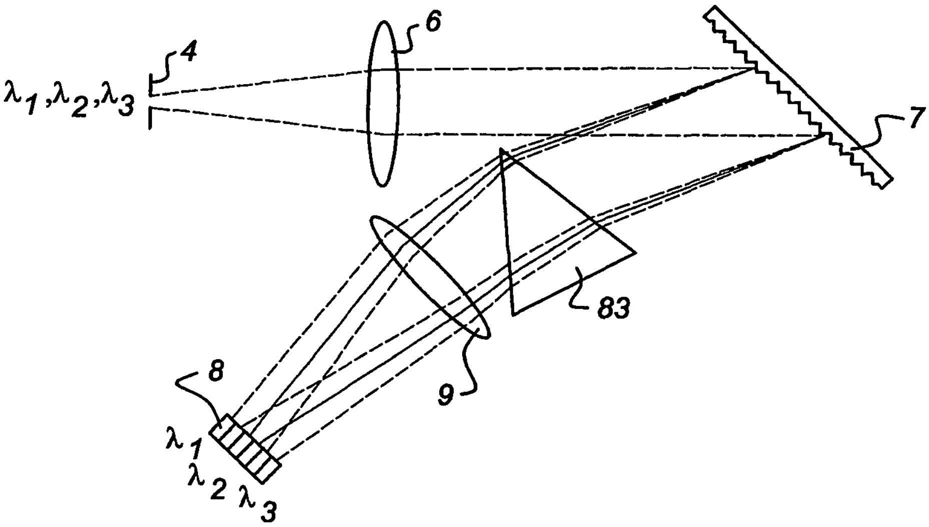

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9909370 A
- US 5933235 A


### Non-patent literature cited in the description


- **CHEN et al.** Multiplexing of large-scale FBG arrays using a two-dimensional spectrometer. *SPIE,* 1999, vol. 3330, 245-252